# FASCICULE DE BREVET EUROPEEN

(11) **EP 1 806 898 B1**
(45) Date de publication et mention de la délivrance du brevet: **02.03.2011**
(21) Numéro de dépôt: 06127262.1
(22) Date de dépôt: 28.12.2006
(51) Int. Cl.: H04L 29/06

(54) **Procédé de transfert de communication entre réseaux locaux sans fil connectés à un réseau mobile, et dispositif de gestion associé**
Handover-Verfahren zwischen an ein Mobilfunknetz angeschlossenen lokalen Funknetzen und Steuerungseinrichtung dafür
Method of hand-off between wireless LANs connected to a cellular network and corresponding control device

(30) Priorité: 10.01.2006 FR 0650090
(43) Date de publication de la demande: 11.07.2007
(73) Titulaire: Alcatel Lucent, 75008 Paris (FR)
(72) Inventeur: El Mghazli, Yacine, 94110 Arcueil (FR); Marce, Olivier, 91300 Massy (FR)
(74) Mandataire: El Manouni, Josiane

(56) Documents cités:
- US-A1- 2005 163 078
- ERONEN P ET AL: "IKEv2 Mobility and Multihoming Protocol (MOBIKE); draft-ietf-mobike-protocol-07.txt" IETF STANDARD-WORKING-DRAFT, INTERNET ENGINEERING TASK FORCE, IETF, 20 décembre 2005 (2005-12-20), XP015042551

## Description

L'invention concerne les réseaux de communication, et plus précisément l'inter-fonctionnement (ou IW pour « InterWorking ») entre des réseaux locaux sans fil (ou WLAN pour « Wireless Local Area Network »), disposant d'une technologie d'accès sans fil protégée par des tunnels sécurisés de type lPsec, et des coeurs de réseau (ou « core network »), par exemple Internet ou de réseau mobile (ou cellulaire) défini par l'organisme 3GPP (2G/3G).

Comme le sait l'homme de l'art, certains réseaux locaux sans fil (WLAN), comme par exemple les réseaux WiFi et WiMax, disposent d'une technologie d'accès sans fil protégée par des tunnels sécurisés de type IPsec et leur permettant d'utiliser les infrastructures des coeurs de réseau de certains réseaux, comme par exemple des réseaux mobiles 3GPP (par exemple UMTS). Cela permet aux clients de ces réseaux WLAN d'accéder à des services 3GPP de commutation de paquets via des réseaux d'accès sans fil protégés par des tunnels sécurisés de type IPsec.

L'organisme 3GPP a proposé deux solutions d'inter-fonctionnement, appelées I-WLAN (« Interworking-WLAN ») et GAN (« Generic Access Network », intégrée dans le standard 3GPP après avoir été développée de façon indépendante sous l'acronyme UMA (« Unlicensed Mobile Access »). La solution GAN est définie sur le site du 3GPP à l'adresse Internet « http://www.3gpp.org » et la technologie UMA est définie à l'adresse Internet « http://www.umatechnology.org ». La mise en oeuvre de chacune de ces deux solutions nécessite l'implantation d'un équipement d'interconnexion, de type passerelle de sécurité (ou SecGW pour « Security GateWay »), à l'interface entre le réseau d'accès sans fil d'un réseau WLAN et les infrastructures du coeur de réseau d'un réseau mobile, ainsi que l'établissement d'une liaison logique sécurisée de type « IPsec tunnel » (tunnel IP sécurisé) entre chaque terminal de communication mobile, d'un client du réseau WLAN souhaitant accéder aux services 3GPP de commutation de paquets du réseau mobile, et ladite passerelle de sécurité.

Ces deux solutions fonctionnent bien tant qu'un terminal de communication mobile utilise un même réseau WLAN, et donc une même passerelle de sécurité, pour accéder aux services 3GPP de commutation de paquets d'un réseau mobile. Mais, chaque fois qu'un terminal de communication mobile sort de la zone de couverture radio d'un premier réseau WLAN (qui lui a permis d'accéder aux services 3GPP de commutation de paquets d'un réseau mobile) et parvient dans la zone de couverture radio d'un second réseau WLAN disposant d'une autre passerelle de sécurité que celle du premier réseau WLAN, un nouveau tunnel IP sécurisé doit être établi entre ce terminal mobile et la passerelle de sécurité du second réseau WLAN, Une telle situation survient par exemple lorsque l'utilisateur d'un terminal mobile dispose d'un abonnement lui permettant d'utiliser plusieurs réseaux WLAN (et notamment d'effectuer du « roaming » - cas particulier de mobilité inter-opérateurs).

Or, le délai d'établissement d'un nouveau tunnel IP sécurisé est incompatible avec la notion de continuité de service qui est par exemple définie par le standard ITU G. 114. En d'autres termes, les solutions l-WLAN et GAN, proposées par le 3GPP, ne permettent pas de maintenir une continuité de service lors du passage d'un terminal mobile d'un premier réseau WLAN, disposant d'une première passerelle de sécurité, à un second réseau WLAN, disposant d'une seconde passerelle de sécurité.

Pour améliorer la situation, il a été proposé dans le document brevet US 2005/163078 un procédé consistant, lorsqu'une communication a été établie entre un terminal de communication mobile et un coeur de réseau via un premier tunnel sécurisé, établi au sein d'un premier réseau local sans fil entre ce terminal mobile et une première passerelle sécurisée et associé à des données d'authentification et dé sécurité, et lorsque le terminal mobile parvient dans une zone d'intersection entre les zones de couverture radio du premier réseaux local sans fil et d'un second réseau local sans fil :
- à effectuer une procédure de pré-authentification du terminal mobile, au niveau de la couche IP, auprès de la seconde passerelle de sécurité, via le premier tunnel sécurisé, et en utilisant les mêmes données d'authentification et de sécurité,
- puis à établir un second tunnel sécurisé entre le terminal mobile et la seconde passerelle de sécurité,
- et à effectuer la mise à jour des informations de gestion de mobilité via le second tunnel sécurisé.

L'invention a pour but d'améliorer encore la situation, et plus précisément de permettre le maintien de la continuité de service lors du passage d'un terminal mobile d'un réseau WLAN à un autre (y compris lorsque les deux réseaux WLAN appartiennent à un même opérateur).

Elle propose à cet effet un procédé du type de celui présenté ci-avant (et décrit dans le document brevet US 2005/163078), et dans lequel, une fois que l'on a effectué la mise à jour des informations de gestion de mobilité via le second tunnel sécurisé, on procède au transfert inter-réseaux locaux sans fil (ou « handover ») en adressant à la seconde passerelle de sécurité, via le second tunnel sécurisé, un message de mise à jour d'adresse pair du terminal mobile, et on autorise la poursuite de la communication entre le terminal mobile et le coeur de réseau via le second tunnel sécurisé.

Le procédé selon l'invention peut comporter d'autres caractéristiques qui peuvent être prises séparément ou en combinaison, et notamment :
- on peut effectuer la procédure de pré-authentification au moyen d'un protocole de communication dédié à la création d'associations de sécurité, comme par exemple le protocole IKE (de préférence dans sa seconde version IKEv2));
- la transmission du message de mise à jour d'adresse pair, via le second tunnel sécurisé, peut se faire au moyen d'une extension du protocole de communication, dédiée à la mobilité et à la multi-domiciliation, comme par exemple l'extension protocolaire MOBIKE.

L'invention propose également un dispositif dédié à la gestion des transferts de communication entre des premier et second réseaux locaux sans fil, disposant chacun d'une technologie d'accès sans fil et disposant respectivement de première et seconde passerelles sécurisées connectées à un coeur de réseau d'un réseau (éventuellement mobile) offrant des services (éventuellement 3GPP) de commutation de paquets, au sein d'un terminal de communication mobile comportant au moins une interface de couche de niveau deux (L2) propre, en cas d'activation, à contrôler des transferts inter-réseaux locaux sans fil (ou handovers). Ce dispositif comprend :
- des moyens de détection chargés de générer un message d'avertissement lorsqu'une communication a été établie entre le terminal mobile et le coeur de réseaux via un premier tunnel sécurisé, établi au sein du premier réseau local sans fil entre ce terminal mobile et la première passerelle sécurisée et associé à des données d'authentification et de sécurité, et lorsque leur terminal mobile parvient dans une zone d'intersection entre des zones de couverture radio des premier et second réseaux locaux sans fil, et
- des moyens de gestion chargés, lorsqu'ils reçoivent un message d'avertissement:
   - de déclencher une procédure de pré-authentification de leur terminal mobile, au niveau de la couche IP, auprès de la seconde passerelle de sécurité, via l'interface de couche de niveau deux et le premier tunnel sécurisé, et avec les données d'authentification et de sécurité,
   - puis d'ordonner, d'une part, l'établissement d'un second tunnel sécurisé, entre leur terminal mobile et la seconde passerelle de sécurité, et d'autre part, la mise à jour des informations de gestion de mobilité via le second tunnel sécurisé.

Ce dispositif se caractérise par le fait que ses moyens de gestion sont également chargés, après avoir ordonné l'établissement d'un second tunnel sécurisé, entre le terminal mobile et la seconde passerelle de sécurité et une mise à jour d'informations de gestion de mobilité via le second tunnel sécurisé, d'ordonner l'activation de l'interface de couche de niveau deux afin qu'elle procède au transfert (ou handover) entre les premier et second réseaux locaux sans fil, en adressant à la seconde passerelle de sécurité, via le second tunnel sécurisé, un massage de mise à jour d'adresse pair du terminal mobile, puis d'autoriser la poursuite de la communication entre leur terminal mobile et le coeur de réseau via le second tunnel sécurisé une fois que le transfert (et donc le handover) est terminé.

L'invention propose également un terminal de communication mobile capable de se connecter à des réseaux locaux sans fil, disposant d'une technologie d'accès sans fil, afin d'établir des communications avec un coeur de réseau d'un réseau (éventuellement mobile) offrant des services (éventuellement 3GPP) de commutation de paquets et connecté auxdits réseaux locaux sans fil, et comprenant un dispositif de gestion du type de celui présenté ci-avant.

Ce terminal mobile peut être chargé d'effectuer chaque procédure de pré-authentification auprès d'une passerelle de sécurité, ordonnée par son dispositif de gestion, au moyen d'un protocole de communication dédié à la création d'associations de sécurité, comme par exemple le protocole IKE.

Par ailleurs, le terminal mobile peut être chargé de transmettre chaque message de mise à jour d'adresse pair au moyen d'une extension du protocole de communication, dédiée à la mobilité et à la multi-domiciliation, comme par exemple l'extension protocolaire MOBIKE.

L'invention est particulièrement bien adaptée, bien que de façon non exclusive, à l'inter-fonctionnement entre des réseaux locaux sans fil de type WiFi ou WiMax, et des réseaux de communication mobiles de type 3GPP.

D'autres caractéristiques et avantages de l'invention apparaîtront à l'examen de la description détaillée ci-après, et des dessins annexés, sur lesquels:
- la figure 1 illustre de façon très schématique et fonctionnelle la connexion d'un terminal mobile (T1), équipé d'un dispositif de gestion selon l'invention, à un coeur de réseau d'un réseau mobile, via un premier tunnel sécurisé établi dans un premier réseau local sans fil,
- la figure 2 illustre de façon très schématique et fonctionnelle la phase de transfert de communication du terminal mobile (T1) de la figure 1 du premier réseau local sans fil vers un second réseau local sans fil, lorsque ce terminal mobile (T1) se trouve situé dans la zone de recouvrement des zones de couverture des premier et second réseaux locaux sans fils, et
- la figure 3 illustre de façon très schématique et fonctionnelle un terminal mobile équipé d'un exemple de réalisation d'un dispositif de gestion selon l'invention et d'une interface de couche de niveau deux (L2).

Les dessins annexés pourront non seulement servir à compléter l'invention, mais aussi contribuer à sa définition, le cas échéant.

L'invention a pour objet de permettre le maintien de la continuité de service pour un terminal mobile, connecté à un coeur de réseau d'un réseau (éventuellement mobile) via un tunnel sécurisé établi dans un premier réseau local sans fil, lorsqu'il passe de la zone de couverture dudit premier réseau local sans fil à la zone de couverture d'un second réseau local sans fil.

Dans ce qui suit, on considère à titre d'exemple non limitatif que les réseaux locaux sans fil sont de type WLAN et que le coeur de réseau, connecté aux réseaux WLAN, appartient à un réseau mobile, par exemple de type UMTS. Mais, l'invention n'est pas limitée à ce type de réseau local sans fil et à ce type de réseau mobile. Elle concerne en effet, tous les réseaux locaux sans fil disposant d'une technologie d'accès sans fil protégée par des tunnels sécurisés de type IPsec, et notamment les réseaux Bluetooth, WiFi et WiMax, ainsi que tous les réseaux de communication disposant d'un coeur de réseau offrant des services (éventuellement 3GPP) de commutation de paquets, et notamment les réseaux mobiles (ou cellulaires) 3GPP (2G/3G).

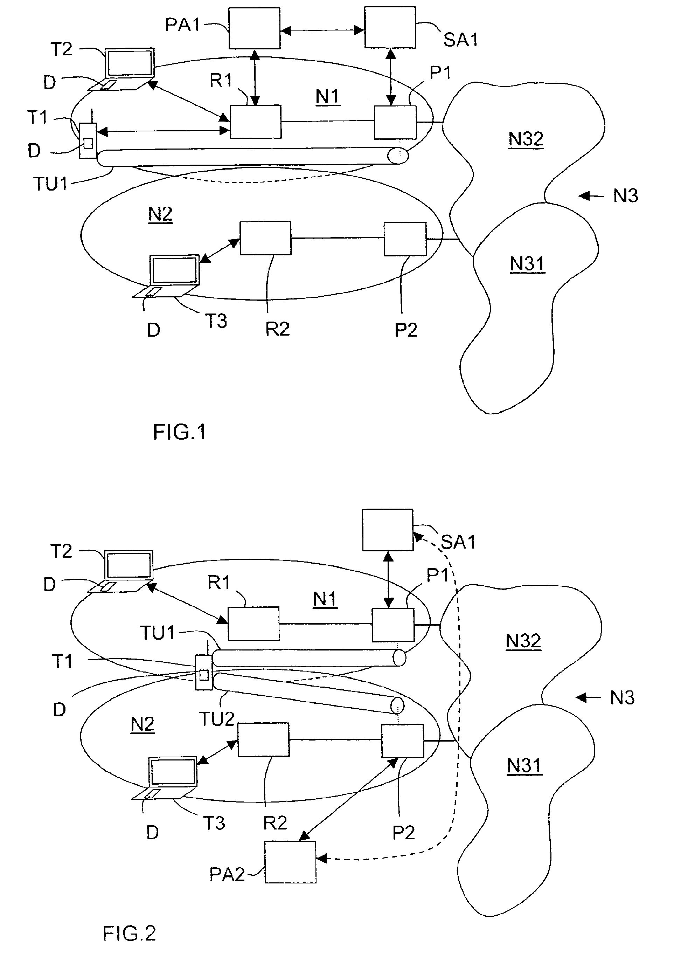

Dans l'exemple illustré sur les figures 1 et 2, le premier réseau WLAN N1 comporte un premier réseau d'accès sans fil (également référencé N1), et le second réseau WLAN N2 comporte un second réseau d'accès sans fil (également référencé N2). Par ailleurs, le réseau mobile N3 comporte un réseau d'accès radio N31 et un coeur de réseau (de type « 3GPP WLAN IP Access ») N32 connectés l'un à l'autre.

Par ailleurs, les premier N1 et second N2 réseaux d'accès sans fil comportent respectivement des première P1 et seconde P2 passerelles sécurisées connectées chacune au coeur de réseau N32, du réseau mobile N3, et assurant l'inter-fonctionnement entre leur réseau WLAN N1, N2 et le réseau mobile N3.

L'exemple illustré sur les figures 1 et 2 correspond à une architecture d'inter-fonctionnement 3GPP/WLAN de type 1-WLAN, telle que définie sur le site Internet du 3GPP à l'adresse « http://www.3gpp.org ». Mais, l'invention concerne également l'architecture d'inter-fonctionnement 3GPP/WLAN de type GAN, telle que définie sur le site Internet du 3GPP à l'adresse « http://www.3gpp.org ».

Les caractéristiques de l'inter-fonctionnement 3GPP/WLAN sont définies par les recommandations et spécifications techniques 3GPP TR 23.934, TS 22.234, TS 23.234 et TS 24.234 de l'organisme 3GPP.

En outre, les premier N1 et second N2 réseaux d'accès sans fil disposent chacun d'une zone de couverture radio (ici matérialisée schématiquement par une ellipse), pourvue d'au moins un équipement d'accès radio (ou point d'accès) R1, R2 couplé à leur passerelle de sécurité P1, P2 et auquel peuvent se connecter des terminaux de communication mobile T1, T2 et T3. L'invention s'applique dès lors que les zones de couverture radio des premier N1 et second N2 réseaux d'accès sans fil présentent une zone de recouvrement, comme dans l'exemple illustré sur les figures 1 et 2.

On notera qu'un même équipement peut assurer à la fois les fonctions de point d'accès R1 ou R2 et de passerelle de sécurité P1 ou P2.

On entend par « terminal de communication mobile » tout terminal de communication capable de se connecter à un réseau d'accès sans fil N1, N2 afin d'échanger des données par voie d'ondes, sous la forme de signaux, avec un autre équipement d'utilisateur ou un équipement de réseau, et dont l'utilisateur a contracté auprès de l'opérateur d'un réseau WLAN N1, N2 un abonnement lui permettant d'utiliser des services spécifiques offerts par un réseau mobile lorsqu'il est connecté à son coeur de réseau via un réseau WLAN. Il pourra donc s'agir, par exemple, d'un téléphone portable, ou d'un assistant personnel numérique (ou PDA) ou d'un ordinateur portable équipé d'un dispositif de communication WLAN.

Comme le sait l'homme de l'art, afin qu'un terminal mobile du type précité, par exemple T1, puisse établir une communication avec le coeur de réseau N32 du réseau mobile N3 via un réseau WLAN (ici le premier N1), afin d'accéder à l'un au moins des services qu'il offre, un tunnel sécurisé TU1 doit être établi entre ce terminal mobile T1 et la passerelle de sécurité (ici P1) du (premier) réseau d'accès sans fil (ici N1). Ce tunnel sécurisé est de type Ipsec.

L'établissement de ce tunnel sécurisé TU1 nécessite l'authentification préalable de l'utilisateur du terminal mobile T1 par un serveur SA1, de type AAA (pour « Authorization, Authentication and Accounting » - autorisation, authentification et comptabilisation), du premier réseau WLAN N1, et par la première passerelle de sécurité P1.

Pour s'authentifier auprès du serveur AAA SA1, le terminal mobile T1 transmet à un équipement de réseau PA1, de type proxy AAA et connecté au serveur AAA SA1, des données d'authentification et éventuellement de sécurité, généralement appelées « EAP credentials » en langue anglais. Ces données sont par exemple un mot de passe et/ou un « login ». Cette transmission se fait au moyen d'un protocole de transport et d'authentification, comme par exemple le protocole RADIUS ou DIAMETER.

Le proxy AAA PA1 vérifie auprès du serveur AAA SA1 si les données d'authentification (et de sécurité) transmises correspondent effectivement à un client autorisé à accéder aux services (par exemple de type IMS). Si le client dispose d'une autorisation, son terminal mobile T1 est alors enregistré auprès du serveur AAA SA1 et autorisé à accéder au premier réseau WLAN N1.

Pour s'authentifier auprès de la première passerelle de sécurité P1 le terminal mobile T1 lui transmet ses données d'authentification (et de sécurité). Cette transmission se fait par exemple au moyen d'un protocole de communication dédié à la création d'associations de sécurité, comme par exemple le protocole IKE (« Internet Key Exchange »), de préférence dans sa deuxième version IKEv2 définie dans le document « <draft-ietf-ispec-ikev2-17.txt> » accessible sur le site de l'IETF à l'adresse « http://www.ietf.org/rfc/rfc4306.txt ».

Une fois les authentifications effectuées, un (premier) tunnel sécurisé TU1 de type IPsec est établi entre l'interface de couche de niveau deux (L2) I1 (activée à cet effet) et la première passerelle de sécurité P1. Le terminal mobile T1 peut alors communiquer avec le coeur de réseau N32 du réseau mobile N3.

L'invention intervient lorsqu'un terminal mobile, par exemple T1, a déjà établi une communication avec un coeur de réseau N32 d'un réseau mobile N3 via un premier tunnel sécurisé TU1 établi au sein d'un premier réseau WLAN N1 (entre ledit terminal mobile T1 et la première passerelle sécurisée P1) avec des données d'authentification et de sécurité, et qu'il parvient dans la zone de recouvrement (ou d'intersection) entre la zone de couverture radio du premier réseau WLAN N1 et celle d'un second réseau WLAN N2. En d'autres termes, l'invention intervient chaque fois qu'un terminal mobile, en communication avec un coeur de réseau d'un réseau mobile, s'apprête à quitter un réseau WLAN pour poursuivre sa communication dans un autre réseau WLAN dans le cadre d'un roaming. Cette situation est illustrée sur la figure 2.

L'invention propose d'implanter dans des terminaux mobiles T1 à T3, d'une part, un dispositif D chargé de gérer le transfert de communication lors du passage d'un premier réseau WLAN N1 à un second réseau WLAN N2, et d'autre part, au moins une interface de couche de niveau deux (L2) chargée, en cas d'activation, de contrôler les transferts entre les réseaux WLAN N1 et N2.

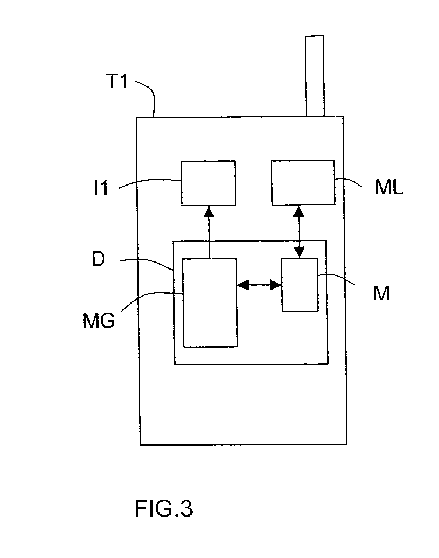

Comme cela est schématiquement illustré sur la figure 3, ce dispositif de gestion D comprend un module de détection MD et un module de gestion MG couplés l'un à l'autre.

Le module de détection MD est chargé d'observer les déplacements du terminal mobile (par exemple T1), dans lequel il est implanté, au sein des zones de couverture des réseaux WLAN N1, N2 auxquels il est autorisé à se connecter en raison de son abonnement. Pour ce faire, il est par exemple couplé au module ML chargé de la localisation au sein de son terminal mobile T1.

Cette observation est plus précisément destinée à détecter quand le terminal mobile T1 parvient dans la zone de recouvrement (ou d'intersection) entre les zones de couverture radio des premier N1 et second N2 réseaux WLAN, et donc quand il s'apprête à quitter le premier (respectivement second) réseau WLAN pour pénétrer dans le second (respectivement premier) réseau WLAN.

Chaque fois que le terminal mobile T1 a établi une communication avec le coeur de réseau N32 du réseau mobile N3 via un premier tunnel sécurisé TU1 établi dans un premier réseau WLAN N1, et que le module de détection MD détecte sa présence dans une zone de recouvrement de ce premier réseau WLAN N1 et d'un second réseau WLAN N2, ledit module de détection MD génère un message d'avertissement à destination du module de gestion MG, afin de lui signaler cette présence. De préférence, le message d'avertissement comporte des données représentatives du second réseau WLAN N2 dans la zone de couverture duquel le terminal mobile T1 vient de pénétrer. Ces données comprennent au moins l'adresse du second point d'accès R2 du second réseau WLAN N2, et donc indirectement l'adresse de la seconde passerelle de sécurité P2 de ce second réseau WLAN N2.

Le module de gestion MG est chargé, chaque fois qu'il reçoit un message d'avertissement (généré par le module de détection MD), de déclencher une procédure de pré-authentification de son terminal mobile T1 auprès du serveur AAA SA1 du premier réseau WLAN N1 et de la seconde passerelle de sécurité P2 du second réseau WLAN N2. Cette procédure de pré-authentification s'effectue au niveau de la couche de protocole IP et via le premier tunnel sécurisé TU1. Il est rappelé que la couche de protocole IP est située au dessus de la couche de niveau deux (L2 ou « link layer »). Par ailleurs, cette procédure de pré-authentification s'effectue avec les mêmes données d'authentification et de sécurité (EAP credentials) que celles précédemment utilisées pour l'authentification initiale de l'utilisateur du terminal mobile T1, lors de l'établissement du premier tunnel sécurisé T1.

Pour se pré-authentifier auprès du serveur AAA SA1, le terminal mobile T1 transmet au proxy AAA PA1 du premier réseau WLAN N1 les mêmes données d'authentification et de sécurité (EAP credentials) que celles utilisées lors des procédures d'authentification initiale et d'établissement du premier tunnel sécurisé TU1. Cette transmission se fait au moyen du même protocole de transport et d'authentification que celui précédemment utilisé (par exemple RADIUS ou DIAMETER).

Le proxy AAA PA1 vérifie ensuite auprès du serveur AAA SA1 si les données d'authentification (et de sécurité) transmises correspondent effectivement à un client autorisé à accéder aux services. Si le client dispose d'une autorisation, son terminal mobile T1 est autorisé à accéder au second réseau WLAN N2.

Pour se pré-authentifier auprès de la seconde passerelle de sécurité P2 le terminal mobile T1 lui transmet ses données d'authentification et de sécurité (toujours les mêmes). Cette transmission se fait de préférence au moyen du protocole de communication IKEv2.

Toutes ces opérations se font pendant la communication du terminal mobile T1 via le premier tunnel sécurisé TU1, et donc via la première passerelle de sécurité P1. Ces opérations se font donc de façon transparente pour l'utilisateur du terminal mobile T1.

L'invention se sert de l'indépendance vis-à-vis du média de transport du cadre de pré-authentification tel qu'il a été défini par l'IETF dans son document « <draft-ohba-mobopts-mpa-framework-01.txt> » accessible sur son site à l'adresse « http://www.jetf.org/internet-drafts/draft-ohba-mobopts-mpa-framework-01.txt ».

Lorsque les opérations de pré-authentification sont terminées et que le terminal mobile T1 a reçu l'autorisation d'établir un second tunnel sécurisé TU2, il transmet cette autorisation au module de gestion MG de son dispositif D. Le module de gestion MG ordonne alors l'établissement d'un second tunnel sécurisé TU2 entre son terminal mobile T1 et la seconde passerelle de sécurité P2 désignée par le message d'avertissement précédemment reçu.

Une fois le second tunnel sécurisé TU2 établi, le module de gestion MG ordonne à son terminal mobile T1 de mettre à jour des informations de gestion de mobilité qui le concernent dans le coeur de réseau N32 du réseau mobile N3, via le second tunnel sécurisé TU2. Cela consiste à mettre principalement à jour dans le coeur de réseau N32 les informations de localisation du terminal mobile T1, le type d'accès utilisé, l'opérateur de l'accès utilisé, et analogue. Puis, il ordonne à son terminal mobile T1 de procéder au handover au niveau de l'interface de couche de niveau deux (L2) I1 afin que le transfert entre les premier N1 et second N2 réseaux WLAN puisse se faire via le second tunnel sécurisé TU2.

Plus précisément, la procédure de handover se fait par envoi à la seconde passerelle de sécurité P2 du second réseau WLAN N2, par le terminal mobile T1, d'un message de mise à jour d'adresse pair (ou « peer address ») contenant sa nouvelle adresse IP dans le second réseau WLAN N2. Ce message de mise à jour d'adresse pair est transmis à la seconde passerelle de sécurité P2 au moyen d'une extension du protocole de communication (ici IKE, par exemple), qui est dédiée à la mobilité et à la multi-domiciliation (ou « multi-homing »). Par exemple, on peut utiliser l'extension de protocole appelée MOBIKE, définie dans les documents « <draft-ietf-mobike-design-03.txt> » et « <draft-ietf-ispec-mobike-protocol-04.txt> » accessibles sur le site de l'IETF. Bien entendu, la passerelle de sécurité P2 doit pouvoir supporter cette extension.

La passerelle de sécurité P2 du second réseau WLAN N2 peut alors mettre à jour les données de sécurité qui sont stockées dans sa base de données dédiée à la politique de sécurité. Cette mise à jour consiste ici à stocker la nouvelle adresse du terminal mobile T1.

Une fois la mise à jour des données de sécurité effectuée, le handover est terminé. Le module de gestion MG peut alors autoriser son terminal mobile T1 à poursuivre la communication avec le coeur de réseau N32 du réseau mobile N3 via le second tunnel sécurisé TU2 et via la seconde passerelle de sécurité P2. Il est rappelé que cette communication était jusqu'alors établie via le premier tunnel sécurisé TU1 et via la première passerelle de sécurité P1. Il y a donc bien une continuité de service.

Le dispositif de gestion D selon l'invention, et notamment son module de détection MD et son module de traitement MT, peuvent être réalisés sous la forme de circuits électroniques, de modules logiciels (ou informatiques), ou d'une combinaison de circuits et de logiciels.

Il est important de noter que si le terminal mobile T1 est agencé de manière à bénéficier d'une optimisation du mécanisme de handover (transfert inter-réseaux) au niveau de la couche L2, ce mécanisme optimisé est automatiquement intégré dans le traitement offert par l'invention afin d'en tirer partie (il ne servirait en effet à rien d'améliorer le niveau deux (L2), si l'on perdait le temps gagné au niveau IP).

Grâce à l'invention, le temps nécessaire au transfert de communication inter-réseaux locaux sans fil est notablement réduit. Il est en effet principalement réduit au délai de handover de la couche de niveau deux (L2) (c'est-à-dire au changement de réseau WLAN au niveau de l'interface I1 du fait que tout le plan IP est préconfiguré avant).

L'invention ne se limite pas aux modes de réalisation de dispositif de gestion et de terminal de communication mobile décrits ci-avant, seulement à titre d'exemple, mais elle englobe toutes les variantes que pourra envisager l'homme de l'art dans le cadre des revendications ci-après.

## Revendications

1. Procédé de transfert d'une communication entre des premier (N1) et second (N2) réseaux locaux sans fil disposant d'une technologie d'accès sans fil et respectivement de première (P1) et seconde (P2) passerelles sécurisées connectées à un coeur de réseau (N32) d'un réseau (N3) offrant des services de commutation de paquets, ledit procédé consistant, en cas d'établissement d'une communication entre un terminal de communication mobile. (T1) et ledit coeur de réseau (N32) via un premier tunnel sécurisé (TU1) établi au sein dudit premier réseau local sans fil (N1) entre ledit terminal mobile (T1) et ladite première passerelle sécurisée (P1) et associé à des données d'authentification et de sécurité, et lorsque ledit terminal mobile (T1) parvient dans une zone d'intersection entre les zones de couverture radio desdits premier (N1) et second (N2) réseaux locaux sans fil, i) à effectuer une procédure de pré-authentification dudit terminal mobile, au niveau d'une couche IP, auprès de ladite seconde passerelle de sécurité (P2), via ledit premier tunnel sécurisé (TU1), et en utilisant lesdites données d'authentification et de sécurité, ii) puis à établir un second tunnel sécurisé (TU2) entre ledit terminal mobile (T1 et ladite seconde passerelle de sécurité (P2), iii) puis à effectuer une mise à jour d'informations de gestion de mobilité via ledit second tunnel sécurisé (TU2), ledit procédé **caractérisé en ce qu'**il consiste en outre, après iii), iv) à procéder au transfert inter-réseaux locaux sans fil en adressant à la seconde passerelle de sécurité, via ledit second tunnel sécurisé (TU2), un message de mise à jour d'adresse pair du terminal mobile (T1), puis v) à autoriser la poursuite de la communication via ledit second tunnel sécurisé (TU2).

2. Procédé selon la revendication 1, **caractérise en ce que** l'on effectue ladite procédure de pré-authentification au moyen d'un protocole de communication dédié à la création d'associations de sécurité.

3. Procédé selon la revendication 2, **caractérisé en ce que** ledit protocole de communication est un protocole appelé IKE.

4. Procédé selon l'une des revendications 2 et 3, **caractérisé en ce que** l'on transmet ledit message de mise à jour d'adresse pair au moyen d'une extension dudit protocole de communication, dédiée à la mobilité et à la multi-domiciliation.

5. Procédé selon la revendication 4, **caractérisé en ce que** ladite extension de protocole de communication est un protocole appelé MOBIKE.

6. Dispositif (D) de gestion de transfert de communication entre des premier (N1) et second (N2) réseaux locaux sans fil disposant d'une technologie d'accès sans fil et respectivement de première (P1) et secondé (P2) passerelle sécurisées connectées à un coeur de réseau (N32) d'un réseau (N3) offrant des services de commutation de paquets, pour un terminal de communication mobile (T1 comportant au moins une interface (l1) de couche de niveau deux (L2) propre, en cas d'activation, à contrôler des transferts inter-réseaux locaux sans fil, ledit dispositif comprenant i) des moyens de détection (MD) agencés, en cas d'établissement d'une communication entre ledit terminal mobile (T1) est ledit coeur de réseau (N32) via un premier tunnel sécurisé (TU1) établi au sein dudit premier réseau local sans fil (N1) entre ledit terminal mobile (T1) et ladite première passerelle sécurisée (P1) et associé à des données d'authentification et de sécurité, pour générer un message d'avertissement lorsque ledit terminal mobile (T1) parvient dans une zone d'intersection entre des zones de couverture radio desdits premier (N1) et second (N2) réseaux locaux sans fil, et ii) des moyens de gestion (MG) agencés, en cas de réception d'un message d'avertissement, pour déclencher une procédure de pré-authentification dudit terminal mobile (T1), au niveau d'une couche IP, auprès de ladite seconde passerelle de sécurité (P2), via ladite interface de couche de niveau deux (11) et ledit premier tunnel sécurisé (TU1), et avec lesdites données d'authentification et de sécurité, puis pour ordonner l'établissement d'un second tunnel sécurisé (TU2), entre ledit terminal mobile (T1) et ladite seconde passerelle de sécurité (P2) et une mise à jour d'informations de gestion de mobilité via le second tunnel sécurisé, **caractérisé en ce que** lesdits moyens de gestion (MG) sont en outre agencés, après avoir ordonné l'établissement d'un second tunnel sécurisé (TU2), entre ledit terminal mobile (T1) et ladite seconde passerelle de sécurité (P2) et une mise à jour d'informations de gestion de mobilité via le second tunnel sécurisé, pour ordonner l'activation de ladite interface de couche de niveau deux (I1) de sorte qu'elle procède au transfert entre lesdits premier (N1) et second (N2) réseaux locaux sans fil en adressant à ladite seconde passerelle de sécurité (P2), via ledit second tunnel sécurisé (TU2), un message de mise à jour d'adresse pair du terminal mobile (T1), puis pour autoriser la poursuite de la communication via ledit second tunnel sécurisé (TU2) une fois ledit transfert terminé.

7. Terminal de communication mobile (T1-T3) propre à se connecter à des réseaux locaux sans fil (N1, N2), disposant d'une technologie d'accès sans fil, en vue d'établir des communications avec un coeur de réseau (N32) d'un réseau (N3) offrant des services de commutation de paquets et connecté auxdits réseaux locaux sans fil (N1, N2), **caractérisé en ce qu'**il comprend un dispositif de gestion (D) selon la revendication 6.

8. Terminal selon la revendication 7, **caractérisé en ce qu'**il est agencé pour effectuer ladite procédure de pré-authentification, ordonnée par ledit dispositif (D), au moyen d'un protocole de communication dédié à la création d'associations de sécurité.

9. Terminal selon la revendication 8, **caractérisé en ce que** ledit protocole de communication est un protocole appelé lKE.

10. Terminal selon l'une des revendications 8 et 9, **caractérisé en ce qu'**il est agencé pour transmettre chaque message de mise à jour d'adresse pair au moyen d'une extension dudit protocole de communication, dédiée à la mobilité et à la multi-domiciliation.

11. Terminal selon la revendication 10, **caractérisé en ce que** ladite extension de protocole de communication est un protocole appelé MOBIKE.

## Claims

1. A method for transferring a communication between first (N1) and second (N2) wireless local area networks having a wireless access technology and respectively first (P1) and second (P2) secure gateways connected to a core network (N32) of a network (N3) offering packet-switching services, said method consisting, when that communication is established between a mobile communication terminal (T1) and said core network (N32) via a first secure tunnel (TU1) established within said first wireless local area network (N1) between said mobile terminal (T1) and said first secure gateway (P1) and associated with authentication and security data, and said mobile terminal (T1) enters an intersecting area between the radio coverage areas of said first (N1) and second (N2) wireless local area networks, i) of performing a pre-authentication procedure of said mobile terminal, within an IP layer, vis-a-vis said second security gateway (P2), via said first secure tunnel (TU1), and using said authentication and security data, ii) then establishing a second secure tunnel (TU2) between said mobile terminal (T1) and said second security gateway (P2), iii) then performing a mobility management information update via said second secure tunnel (TU2), said process **characterized in that** it further consists, after iii), of iv) preceding with the transfer between wireless local area networks by sending the second security gateway, via said second secure tunnel (TU2), a peer address update message of the mobile terminal (T1), then v) authorizing the continuation of the communication via said second secure tunnel (TU2).

2. A method according to claim 1, **characterized in that** said pre-authentication procedure is carried out by means of a communication protocol devoted to the creation of security associations.

3. A method according to claim 2, **characterized in that** said communication protocol is a protocol known as IKE

4. A method according to one of the claims 2 and 3, **characterized in that** said peer address update message is transmitted by means of an extension of said communication protocol, devoted to mobility and multi-homing.

5. A method according to claim 4, **characterized in that** said communication protocol extension is a protocol known as MOBIKE.

6. A device for managing the transfer of a communication between first (N1) and second (N2) wireless local area networks having a wireless access technology and respectively first (P1) and second (P2) secure gateways connected to a core network (N32) of a network (N3) offering packet-switching services, for a mobile communication terminal (T1) comprising at least one level-two (L2) layer interface (11) capable, if activated, of controlling transfers between wireless local area networks, said device comprising i) means for detection (MD) configured, in the event that communication is established between said mobile terminal (T1) and said core network (N32) via a first secure tunnel (TU1) established within said first wireless local area network (N1) between said first mobile terminal (T1) and said first secure gateway (P1) and associated with authentication and security data, to generate a warning message whenever said mobile terminal (T1) enters an intersecting area between the radio coverage areas of said first (N1) and second (N2) wireless local area networks, and ii) management means (MG) configured, in the event that a warning message is received, to trigger a pre-authentication procedure of said mobile terminal, within an IP layer, vis-à-vis said second security gateway (P2), via said level-two (L2) layer interface and said first secure tunnel (TU1), and using said authentication and security data, then to order the establishment of a second secure tunnel (TU2) between said mobile terminal (T1) and said second security gateway (P2) and an update of mobility management information via the second secure tunnel, **characterized in that** said management means are further configured, after having ordered the establishment of a second secure tunnel (TU2) between said mobile terminal (T1) and said second security gateway (P2) and an update of mobility management information via the second secure tunnel, to order the activation of said level-two (L2) layer interface so that it proceeds with the transfer between said first (N1) and second (N2) wireless local area networks by sending to said second security gateway (P2), via said second secure tunnel (TU2), a peer address update message of the mobile terminal (T1), then to allow the continuation of the communication via said second secure tunnel (TU2) once said transfer is complete.

7. A mobile communication terminal (T1-T3) capable of connecting to wireless local area networks (N1, N2) having a wireless access technology, in view of establishing communications with a core network (N32) of a network (N3) offering packet-switching services and connected to said wireless local area networks (N1, N2), **characterized in that** comprises a management device (D) according to claim 6.

8. A terminal according to claim 7, **characterized in that** it is configured to perform said pre-authentication procedure, ordered by said device (D), by means of a communication protocol devoted to the creation of security associations.

9. A method according to claim 8, **characterized in that** said communication protocol is a protocol known as IKE.

10. A terminal according to one of the claims 8 and numeral not in, **characterized in that** it is configured to transmit each peer address update message by means of an extension of said communication protocol, dedicated to mobility and multi-homing.

11. A method according to claim 10, **characterized in that** said communication protocol extension is a protocol known as MOBIKE.

## Patentansprüche

1. Verfahren zur Übergabe einer Kommunikation zwischen einem ersten (N1) und einem zweiten (N2) drahtlosen lokalen Netzwerk, die über eine drahtlose Zugangstechnologie und jeweils ein erstes (P1) und ein zweites (P2) gesichertes Gateway, welche an einen Netzwerkkern (N32) eines Paketvermittlungsdienste anbietenden Netzwerks (N3) angeschlossen sind, verfügen, wobei das besagte Verfahren darin besteht, im Fall des Aufbaus einer Kommunikation zwischen einem mobilen Kommunikationsendgerat (T1) und dem besagten Netzwarkkern (N32) über einen ersten gesicherten Tunnel (TU1), welcher innerhalb des besagten ersten drahtlosen lokalen Netzwerks (N1) zwischen dem besagten mobilen Endgerät (T1) und dem besagten ersten gesicherten Gateway (P1) hergestellt und mit Authentifizierungs- und Sieherheitsdaten assoziiert ist, und wenn das besagte mobile Endgerät (T1) einen Übergangsbereich zwischen den Funkabdeckungsbereichen des besagten ersten (N1) und des besagten zweiten (N2) drahtlosen lokalen Netzwerken erreicht, i) eine Vorauthentifizierungsprozedur des besagten mobilen Endgeräts auf der Ebene einer IP-Schicht an dem besagten zweiten gesicherten Sicherheits-Gateway (P2) über den besagten ersten gesicherten Tunnel (TU1), und unter Verwendung der besagten Authentifizierungs- und Sicherheitsdaten, durchzuführen, ii) danach einen zweiten gesicherten Tunnel (TU2) zwischen dem besagten mobilen Endgerät (T1) und dem besagten zweiten Sichertieits-Gateway (P2) herzustellen, iii) anschließend eine Aktualisierung von Mobilitätsverwaltungsinformationen über den besagten zweiten gesicherten Tunnel (TU2) vorzunehmen, wobei das besagte Verfahren weiterhin darin besteht, nach iii), iv) die Übergabe zwischen den drahtlosen lokalen Netzwerken durchzuführen, indem eine Adresspaar-Aktuaiisierungsnachricht des mobilen Endgeräts (T1) über den besagten zweiten gesicherten Tunnel (TU2) an das zweite Sicherheits-Gateway adressiert wird, und v) das Fortführen der Kommunikation über den besagten zweiten gesicherten Tunnel (TU2) zu ermöglichen.

2. Verfahren nach Anspruch 1, **dadurch gekennzeichnet, dass** man die besagte Vorauthentifizierung anhand eines für das Herstellen von Sicherheitsassoziationen bestimmten KornrmlrÜkationsprotokolls durchführt.

3. Verfahren nach Anspruch 2, **dadurch gekennzeichnet, dass** das besagte Kommunikationsprotokoll ein sogenanntes IKE-Protokoll ist.

4. Verfahren nach Anspruch 2 et 3, **dadurch gekennzeichnet, dass** man die besagte Adresspaar-Aktuaiisierungsrtachncht anhand einer für die Mobilität und die Mehrfach-Domizilierung bestimmte Erweiterung des besagten Kommunikationsprotokolls übertrag.

5. Verfahren nach Anspruch 4, **dadurch gekennzeichnet, dass** die besagte Erweiterung des Kommunikafionsprotokolls ein sogenanntes MOBIKE-Protokoll ist.

6. Vorrichtung (D) zur Verwaltung der Übergabe einer Kommunikation zwischen einem ersten (N1) und einem zweiten (N2) drahtlosen lokalen Netzwerk, die über eine drahtlose Zugangstechnologie und jeweils ein erstes (P1) und ein zweites (P2) gesichertes Gateway, welche an einen Netzwerkkern (N32) eines Paketkommunikalionsdienste anbietenden Netzwerks (N3) angeschlossen sind, verfügen, für ein mobiles Kommunikationsendgerät (T1) mit mindestens einer Schicht-Schnittstelle (I1) auf Ebene zwei (L2), welche dazu ausgelegt ist, bei Aktivierung die Übergabe zwischen drahtlosen lokalen Netzwerken zu steuern, wobei die besagte Vorrichtung umfasst: i) Erkehnungsmittel (MD), welche dazu ausgelegt sind, im Fall des Aufbaus einer Kommunikation zwischen dem besagten mobilen Endgerät (T1) und dem besagten Netzwerkkern (N32) über einen ersten gesicherten Tunnel (TU1), welcher innerhalb des besagten ersten drahtlosen lokalen Netzwerks (N1) zwischen dem besagten mobilen Endgerät (T1) und dem besagten ersten gesicherten Gateway (P1) hergestellt und mit Authentinzierungs- und Sicherheitsdaten assoziiert ist, eine Warnmeldung zu erzeugen, wenn das besagte mobile Endgerät (T1) einen Übergangsbereich zwischen den Funkabdeckungsbereichen des besagten ersten (N1) und des besagten zweiten (N2) drahtlosen lokalen Netzwerken erreicht, und ii) Verwaltungsmittel (MG) welche dazu ausgelegt sind, im Fall des Empfangs einer Warnmeldung eine Vorauthentifizierungsprozedur des besagten mobilen Endgeräts (T1) auf der Ebene einer IP-Schicht an dem besagten zweiten gesicherten Sicherheits-Gateway (P2) über die besagte Schicht-Schnittstelle der Ebene zwei (I1) und den besagten ersten gesicherten Tunnel (TU1), und anhand der besagten Authentifizierungs- und Sicherheitsdaten, auszulösen und anschließend das Herstellen eines zweiten gesicherten Tunnels (TU2) zwischen dem besagten mobilen Endgerät (T1) und dem besagten zweiten Sicherheits-Gateway (P2) und eine Aktualisierung von Mobilitätsverwaltungsinformationen über den besagten zweiten gesicherten Tunnel zu veranlassen, **dadurch gekennzeichnet, dass** die besagten Verwaltungsmittel, (MG) weiterhin dazu ausgelegt sind, nach Veranlassen des Herstellens eines zweiten gesicherten Tunnels (TU2) zwischen dem besagten mobilen Endgerät (T1) und dem besagten zweiten Sicherheits-Gateway (P2) und einer Aktualisierung von Mobiiitätsverwaltungsinformationen über den besagten zweiten gesicherten Tunnel, die Aktivierung der besagten Schicht-Schnittstelle der Ebene zwei (I1) zu veranlassen, so dass diese die Übergabe zwischen dem besagten ersten (N1) und dem besagten zweiten (N2) drahtlosen lokalen Netzwerk vornimmt, indem sie eine Adresspaar-Aktualisierungsnachricht des mobilen Endgeräts (T1) über den besagten zweiten gesicherten Tunnel (TU2) an das besagte zweite Siclierheits-Gateway (P2) adressiert, und nach Beenden der besagten Übergabe das Fortführen der Kommunikation über den besagten zweiten gesicherten Tunnel (TU2) zu ermöglichen,

7. Mobiles Kommuhikafionsendgerät (T1-T3), welches für den Anschluss an drahtlosen lokalen Netzwerke (N1, N2) ausgelegt ist und über eine drahtlose Zugangstechnologie verfügt, um Kommunikationen mit einem Netzwerkkern (N32) eines Netzwerks (N3), weiches Paketvermittlungsdienste anbietet und an die besagten drahtlosen lokalen Netzwerke (N1, N2) angeschlossen ist, aufzubauen, **dadurch gekennzeichnet, dass** es eine Verwaltungsvorrichtung (D) gemäß Anspruch 6 umfasst.

8. Endgerät nach Anspruch 7, **dadurch gekennzeichnet, dass** es dazu ausgelegt ist, die besagte von der besagten Vorrichtung (D) veranlasste Vorauthentifizierungsprozedur anhand eines für die Herstellung von Sicherheitsassoziationen bestimmten Kommunikationsprotokolls durchzuführen.

9. Endgerät nach Anspruch 8, **dadurch gekennzeichnet, dass** das besagte Kommunikationsprotokoll ein sogenanntes IKE-Protokoll ist,

10. Endgerät nach einem der vorstehenden Ansprüche 8 und 9, **dadurch gekennzeichnet, dass** es dazu ausgelegt ist, jede Adresspaar-Aktualisierungsnachricht anhand einer für die Mobilität und die Mehrfach-Domizilierung bestimmten Erweiterung des besagten Kommunikationsprotokolls zu übertragen.

11. Endgerät nach Anspruch 10, **dadurch gekennzeichnet, dass** die besagte Erweiterung des Kommunikationsprotokolls ein sogenanntes MOBIKE-Protokoll ist.
